Europäisches Patentamt

European Patent Office

Office européen des brevets

(19)

(11) EP 0 396 177 B1

(12) FASCICULE DE BREVET EUROPEEN

(45) Date de publication et mention
de la délivrance du brevet:
03.07.1996 Bulletin 1996/27

(51) Int. Cl.$^6$: **B32B 7/12**, C08J 3/00,
C08L 31/04

(21) Numéro de dépôt: 90201025.5

(22) Date de dépôt: 24.04.1990

(54) **Structures à couches polymériques multiples comprenant une couche en polymère du fluorure de vinylidène liée à une couche en polymère polaire**

Polymerschichtstoff aus einer mit einem polaren Polymer verbundenen Polyvinylidenfluoridschicht

Polymeric multilayered structure comprising a layer of a polyvinylidene fluoride polymer bonded to a layer of a polar polymer

(84) Etats contractants désignés:
AT BE CH DE DK ES FR GB GR IT LI LU NL SE

(30) Priorité: 05.05.1989 FR 8906086

(43) Date de publication de la demande:
07.11.1990 Bulletin 1990/45

(73) Titulaire: SOLVAY (Société Anonyme)
B-1050 Bruxelles (BE)

(72) Inventeurs:
• Dehennau, Claude
B-1410 Waterloo (BE)
• Dupont, Serge
B-1800 Vilvoorde (BE)

(74) Mandataire: Marckx, Frieda et al
Solvay S.A.
Département de la Propriété Industrielle
310, rue de Ransbeek
B-1120 Bruxelles (BE)

(56) Documents cités:
EP-A- 0 124 931      EP-A- 0 323 672
FR-A- 2 563 156      GB-A- 2 071 007

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne des structures à couches polymériques multiples comprenant une couche en polymère du fluorure de vinylidène liée à une couche en polymère polaire et plus particulièrement de telles structures à couches multiples dans lesquelles le polymère du fluorure de vinylidène est lié au polymère polaire à l'intervention d'un adhésif polymérique comprenant un polymère d'acétate de vinyle.

Les polymères du fluorure de vinylidène sont des polymères thermoplastiques qui présentent un ensemble de propriétés intéressantes et, notamment, une inertie chimique élevée et une excellente résistance aux intempéries et aux rayons ultraviolets. De ce fait, ils trouvent des applications multiples dans des domaines très divers et, notamment, dans la protection contre la corrosion ou les rayons ultraviolets.

Néanmoins, ils présentent l'inconvénient d'être relativement coûteux, ce qui risque de limiter leurs débouchés. Un moyen approprié pour réduire le coût des objets façonnés en polymère du fluorure de vinylidène consiste à utiliser ces polymères sous la forme de structures à couches polymériques multiples (films, feuilles, plaques, tubes, corps creux, etc...) dans lesquels ils sont associés à d'autres polymères, lesquels apportent, par ailleurs, leurs propriétés et avantages propres, tels que par exemple la résistance mécanique, l'aptitude au scellage, l'imperméabilité, la résistance à la griffe, etc... Toutefois, les polymères fluorés précités adhèrent très mal aux autres polymères, de sorte qu'il est généralement nécessaire de recourir à des adhésifs, le plus souvent polymériques, pour assurer un lien adhérent entre ces polymères fluorés et d'autres polymères.

Dans le brevet français FR-A-1 484 153 (THE DOW CHEMICAL CO), on préconise de lier une couche en polyoléfine à une couche en polymère d'hydrocarbure fluoré à l'intervention d'un adhésif polymérique constitué d'un copolymère d'éthylène et d'acétate de vinyle contenant d'environ 13 à 35 % en poids d'acétate de vinyle. L'utilisation de tels copolymères pour lier un polymère de fluorure de vinylidène à un polymère polaire procure des complexes multicouches qui sont sensibles au délaminage.

Dans la demande de brevet FR-A-84 06 372 publiée sous le numéro 2 563 156 (SOLVAY & Cie), on décrit des structures dans lesquelles une couche en polymère du fluorure de vinylidène est liée à une couche en polymère polaire à l'intervention d'un adhésif polymérique constitué d'un polymère d'acétate de vinyle. Quoique les polymères d'acétate de vinyle constituent d'excellents adhésifs à température ambiante, il s'est avéré que certains voient leur résistance au délaminage décroître fortement avec une élévation de la température, ce qui limite leurs débouchés aux domaines où une résistance élevée au délaminage à chaud n'est pas exigée.

La présente invention vise à procurer des adhésifs polymériques améliorés comprenant des polymères d'acétate de vinyle qui procurent une résistance au délaminage à chaud nettement améliorée.

A cet effet, l'invention procure des structures à couches polymériques multiples comprenant une couche en polymère du fluorure de vinylidène liée à une couche en polymère polaire au moyen d'un adhésif polymérique comprenant un polymère d'acétate de vinyle, caractérisées en ce que le produit de la teneur pondérale en acétate de vinyle de l'adhésif polymérique, exprimée en pourcent, par sa viscosité dynamique à 100°C et 1 sec $^{-1}$, exprimée en kPa.s, est supérieur à $1,4.10^3$.

Par structures à couches polymériques multiples comprenant une couche en polymère du fluorure de vinylidène liée à une couche en polymère polaire, on entend désigner les structures multicouches contenant au moins une couche en polymère du fluorure de vinylidène liée à au moins une couche en polymère polaire, ces couches pouvant être liées à des couches d'autres polymères.

L'invention réside donc essentiellement dans le recours à un adhésif polymérique comprenant un polymère d'acétate de vinyle tel que défini ci-dessus pour lier et faire adhérer une couche en polymère du fluorure de vinylidène à une couche en polymère polaire dans la réalisation de structures multicouches. L'utilisation de tels adhésifs polymériques permet la fabrication de structures à couches polymériques multiples dont l'adhérence, mesurée par le biais de la résistance au pelage, est généralement supérieure à 8 N/cm à température ambiante et à 1 N/cm à 80°C.

Des résultats encore meilleurs sont obtenus lorsque le produit de la teneur pondérale en acétate de vinyle de l'adhésif polymérique, exprimée en pourcent, par sa viscosité dynamique à 100°C et 1 sec $^{-1}$ est supérieur à $1,6.10^3$. Dans ce cas, la résistance au pelage est généralement supérieure à 10 N/cm à température ambiante et à 2 N/cm à 80°C. L'utilisation de ces derniers adhésifs constitue donc un mode de réalisation préféré de l'invention.

Par polymère d'acétate de vinyle, on entend désigner aussi bien l'homopolymère que les copolymères binaires d'acétate de vinyle et d'éthylène contenant au moins 50 % en poids d'acétate de vinyle. Les meilleurs résultats sont obtenus avec les copolymères binaires d'acétate de vinyle et d'éthylène contenant de 60 à 90 % en poids d'acétate de vinyle et, plus particulièrement encore, avec ceux contenant de 70 à 85 % en poids d'acétate de vinyle auxquels on donne, par conséquent, la préférence.

Les polymères d'acétate de vinyle, homopolymères et copolymères avec l'éthylène, sont des polymères bien connus en eux-mêmes. Ils peuvent être fabriqués par toutes les techniques usuelles de polymérisation de monomères éthyléniquement insaturés. Habituellement, ils sont fabriqués par polymérisation en émulsion aqueuse.

Les polymères d'acétate de vinyle tels que définis ci-dessus sont des polymères plus ou moins collants et, de ce fait, difficiles à mettre en oeuvre et qui peuvent donner lieu à des phénomènes de "blocking". Afin de pallier cet inconvénient, il est avantageux d'utiliser un polymère d'acétate de vinyle enrobé d'un polymère thermoplastique. Suivant un mode de réalisation particulièrement préféré de l'invention, on utilise donc un polymère d'acétate de vinyle enrobé d'un polymère thermoplastique. A titre d'exemples de pareils polymères thermoplastiques, on peut citer les polymères du fluorure de vinyle ou de vinylidène et les polymères du chlorure de vinyle. Un polymère thermoplastique d'enrobage tout particulièrement préféré est le polychlorure de vinyle. Le polymère thermoplastique d'enrobage est généralement présent à raison d'environ 10 % en poids au maximum du polymère d'acétate enrobé.

L'enrobage du polymère d'acétate de vinyle par un polymère thermoplastique peut s'effectuer, par exemple, par addition à un latex de polymère d'acétate de vinyle d'un latex de polymère thermoplastique et coagulation de l'ensemble, par exemple par addition d'un électrolyte.

Suivant un mode de réalisation particulièrement préféré de la présente invention, on utilise comme adhésif polymérique un mélange de polymère d'acétate de vinyle et de polyméthacrylate de méthyle. L'incorporation de polyméthacrylate de méthyle au polymère d'acétate de vinyle réduit non seulement la tendance au collage de ce dernier, mais améliore par ailleurs notablement la thermostabilité de l'adhésif polymérique sans effet rédhibitoire sur sa résistance au délaminage à chaud pour autant que sa teneur en polyméthacrylate de méthyle n'excède pas 50 % en poids. L'adhésif polymérique selon l'invention peut donc contenir jusqu'à 50 % en poids de polyméthacrylate de méthyle. De préférence, la quantité de polyméthacrylate de méthyle n'excède pas 25 % en poids. Les adhésifs polymériques selon l'invention contiennent donc, de préférence, au moins 75 % en poids de polymère d'acétate de vinyle, le solde étant constitué par du polyméthacrylate de méthyle. Il est entendu que dans le cas de la mise en oeuvre de tels mélanges, la teneur en acétate de vinyle et la viscosité dynamique de l'adhésif polymérique se rapportent au mélange desdits polymères adhésifs.

Des adhésifs polymériques tout particulièrement préférés selon la présente invention sont donc constitués de mélanges de copolymères binaires d'acétate de vinyle et d'éthylène contenant de 60 à 90 % en poids d'acétate de vinyle et de polyméthacrylate de méthyle, ledit mélange contenant au moins 75 % en poids de copolymère d'acétate de vinyle et, de préférence, de 75 à 90 % en poids de copolymère binaire d'acétate de vinyle et d'éthylène.

Par polymère du fluorure de vinylidène, on entend désigner tous les polymères contenant au moins 85 % molaires, et, de préférence, au moins 90 % molaires d'unités monomériques dérivées du fluorure de vinylidène. Les polymères du fluorure de vinylidène qui conviennent à la réalisation des structures multicouches selon l'invention comprennent donc aussi bien les homopolymères du fluorure de vinylidène, que les copolymères du fluorure de vinylidène contenant des unités monomériques dérivées d'un ou de plusieurs comonomères. On donne la préférence aux polymères contenant au moins 90 % molaires d'unité monomériques dérivées du fluorure de vinylidène, le complément éventuel étant constitué de préférence d'unités monomériques dérivées d'autres oléfines fluorées, tels que le fluorure de vinyle, le trifluoréthylène, le chlorotrifluoréthylène, le tétrafluoréthylène et l'hexafluorpropylène. Un polymère fluoré particulièrement préféré est l'homopolymère du fluorure de vinylidène.

Par polymère polaire, on entend désigner les polymères thermoplastiques, élastomériques et thermodurcissables résultant de la polymérisation par polyaddition ou par polycondensation qui possèdent un moment dipolaire permanent ou autrement dit qui contiennent dans leur molécule des groupements dipolaires. A titre d'exemples de pareils polymères polaires, on peut citer les polymères halogénés tels que les polymères (homo- et copolymères) du chlorure de vinyle, du chlorure de vinylidène et du bromure de vinyle, les polymères contenant des fonctions nitriles tels que le polyacrylonitrile et les copolymères du nitrile acrylique et du styrène ou encore les copolymères du nitrile acrylique, du butadiène et du styrène (ABS), les polymères cellulosiques, les polycétones, les polyesters tant aliphatiques qu'aromatiques, tels que les polyacrylates et polyméthacrylates de méthyle ou d'éthyle et le polyéthylène téréphtalate, les copolymères d'alcool vinylique et d'éthylène (c'est-à-dire les copolymères d'acétate de vinyle et d'éthylène dans lesquels au moins 90 % des groupements acétates ont été transformés par hydrolyse ou alcoolyse en groupements hydroxyles), les polycarbonates aromatiques, les polyamides ou nylons et les polyuréthanes qui constituent, par ailleurs, tous des polymères bien connus.

Des polymères polaires préférés sont le polychlorure de vinyle, rigide ou souple (c'est-à-dire plastifié), les copolymères acrylonitrile-butadiène-styrène (ABS), les copolymères du chlorure de vinylidène, les copolymères d'alcool vinylique et d'éthylène, le polyéthylène téréphtalate, le polyméthacrylate de méthyle, les polycarbonates aromatiques, tels que ceux dérivés du bisphénol A, les nylons 6 et 66 et les polyuréthanes.

Des polymères polaires particulièrement préférés sont le polychlorure de vinyle (rigide ou souple), les copolymères acrylonitrile-butadiène-styrène (ABS) et les polycarbonates aromatiques. Un polymère polaire tout particulièrement préféré est le polychlorure de vinyle souple.

Par polychlorure de vinyle souple, on entend désigner les polychlorures de vinyle dont la dureté Shore A mesurée selon la norme ASTM D2240 ne dépasse pas 90. A titre d'exemples de pareils polymères souples, on peut mentionner les polychlorures de vinyle contenant environ 35 à 75 parties en poids de plastifiant et, de préférence, au moins 40 parties en poids de plastifiant pour 100 parties en poids de polymère du chlorure de vinyle.

Il est entendu que chacun des polymères constitutifs des structures à couches multiples selon l'invention peut comprendre les additifs usuels utilisés à la mise en oeuvre de ce polymère, tels que, par exemple, des lubrifiants, des plastifiants, des stabilisants thermiques, des stabilisants à la lumière, des charges particulaires ou fibreuses, des pigments, etc... Il est particulièrement avantageux d'incorporer au polymère du fluorure de vinylidène ou encore à l'adhésif polymérique un agent stabilisant aux rayons ultraviolets en vue de protéger le polymère polaire. De même, il peut être avantageux d'incorporer une faible quantité, par exemple jusqu'à 10 % en poids environ, de polymères adhésifs aux polymères constitutifs des structures à couches multiples.

Le mode d'obtention des structures multicouches selon l'invention n'est pas critique. On peut donc faire appel à toutes les techniques usuelles d'assemblage de couches polymériques pour réaliser les structures multicouches selon l'invention. A titre d'exemple de pareille technique, on peut citer le thermocollage à l'intervention d'une solution de l'adhésif polymérique dans un solvant un ou mélange de solvants appropriés. Des solvants convenant pour cette technique d'assemblage sont, par exemple, les hydrocarbures aromatiques, tels que le toluène, les hydrocarbures chlorés, tels que le chlorure de méthylène, les cétones telles que l'acétone et la méthyléthylcétone, les éthers tels que le tétrahydrofuranne et les esters tels que l'acétate d'éthyle et leurs mélanges. On donne néanmoins la préférence au tétrahydrofuranne. En pratique, le thermocollage à l'intervention d'une solution de l'adhésif polymérique s'effectue par enduction à froid, par exemple à l'aide d'un racle, d'un film, d'une feuille ou d'une plaque en polymère du fluorure de vinylidène (ou en polymère polaire) au moyen d'une solution de l'adhésif polymérique, séchage de l'enduit et pressage à chaud du film, de la feuille ou de la plaque enduits (préencollés) sur un film, une feuille ou une plaque en polymère polaire (ou en polymère du fluorure de vinylidène).

La température et la durée de thermocollage optimales seront évaluées par voie expérimentale dans chaque cas particulier. Elles dépendent, notamment, de la nature du polymère polaire, de l'épaisseur des couches polymériques assemblées et des additifs de mise en oeuvre éventuellement incorporés aux différents polymères.

D'autres techniques d'assemblage de couches polymériques usuelles et appropriées pour réaliser les structures multicouches selon l'invention sont celles dans lesquelles les polymères constitutifs sont mis en oeuvre à une température au moins égale à leur température de ramollissement, telles que le thermolaminage (pressage à chaud de couches polymériques préformées, par exemple, par extrusion), la coextrusion et la coextrusion-doublage.

Le choix de l'une ou l'autre de ces techniques d'assemblage se fera en fonction des propriétés, notamment thermiques, du polymère polaire que l'on souhaite lier au polymère du fluorure de vinylidène.

Des structures à couches polymériques multiples auxquelles on donne la préférence sont celles résultant d'un assemblage par thermocollage ou encore par thermolaminage, par coextrusion ou par coextrusion-doublage et qui comprennent trois couches, en l'occurrence et dans l'ordre une couche en polymère du fluorure de vinylidène, une couche d'adhésif polymérique selon l'invention et une couche en polymère polaire, ce dernier étant, de préférence, choisi parmi le polychlorure de vinyle (souple ou rigide), les copolymères nitrile acrylique-butadiène-styrène (ABS) et les polycarbonates aromatiques.

L'épaisseur des couches polymériques constitutives des structures à couches multiples selon l'invention et l'épaisseur totale desdites structures ne sont pas critiques et dépendent bien entendu de l'usage auquel on les destine. Les structures à couches polymériques multiples selon l'invention peuvent donc se présenter sous la forme de films, de feuilles, de plaques, de tubes, de corps creux, etc...

Les structures à couches polymériques multiples selon l'invention peuvent être utilisées avantageusement, sous la forme de films, de feuilles, de plaques, de tubes ou de corps creux, dans des domaines d'application exigeant une inertie chimique élevée, tels que dans les industries chimiques, pharmaceutiques et alimentaires ou encore une résistance élevée aux rayons ultra-violets, tels que par exemple dans la fabrication de films agricoles ou de serres. A titre d'exemples pratiques non limitatifs d'utilisations de complexes multicouches selon l'invention, on peut signaler des tubes multicouches résistant à la corrosion comprenant une couche en polychlorure de vinyle rigide, des films et des feuilles multicouches pour l'agriculture comprenant une couche en polychlorure de vinyle souple ou rigide ou en polyméthacrylate de méthyle, des bâches et des voiles multicouches comprenant une couche en polyuréthane ou en polyéthylène téréphtalate et des plaques comprenant une couche en ABS dans lesquels les couches constituées par les polymères polaires précités sont liées à une couche en polymère du fluorure de vinylidène à l'intervention d'une adhésif polymérique selon l'invention.

Les exemples qui suivent illustrent l'invention, sans toutefois la limiter.

Les exemples 1 à 4 et 7 à 10, selon l'invention, et les exemples 5 et 6, de comparaison, concernent tous des structures multicouches obtenues par thermocollage d'un film en polyfluorure de vinylidène, d'une épaisseur de 125 µm, sur une feuille en polychlorure de vinyle souple d'une épaisseur de 1,5 mm obtenue par mise en oeuvre d'une composition comprenant pour 100 parties en poids de polychlorure de vinyle 68 parties de phtalate de diisodécyle.

Les exemples 11, 13, 15, 17, 18, 19 et 21, selon l'invention, et les exemples 12, 14, 16, 20 et 22, de comparaison, concernent des structures multicouches obtenues par thermocollage d'un film en polyfluorure de vinylidène d'une épaisseur de 125 µm sur des films, des feuilles ou des plaques, selon l'épaisseur, en divers polymères polaires dont la nature est précisée tableau I en annexe. Dans ce même tableau figure également l'épaisseur des couches en polymères polaires.

Dans les exemples 1, 6 et 7 l'adhésif polymérique utilisé est constitué par un copolymère binaire d'acétate de vinyle et d'éthylène. Dans les exemples 2 à 5, 8 à 10 et 11 à 22, l'adhésif polymérique utilisé est constitué par un mélange de copolymère binaire d'acétate de vinyle et d'éthylène et de polyméthacrylate de méthyle. Le rapport pondéral du copolymère d'acétate de vinyle au polyméthacrylate de méthyle figure au tableau II en annexe (PVAC/PMMA).

Dans les exemples 1 à 5, 11, 13, 15, 17, 18, 19, 21 et 22, le polymère d'acétate de vinyle utilisé est un copolymère binaire d'acétate de vinyle et d'éthylène contenant 82 % en poids d'acétate de vinyle et présentant un indice de fluidité (MI) de 1,65 à 170°C sous une charge de 10 kg. Dans les exemples 6, 12, 14, 16 et 20, il s'agit d'un copolymère à 68 % en poids d'acétate de vinyle présentant un indice de fluidité de 89 dans les mêmes conditions. Enfin, dans les exemples 7 à 10, il s'agit d'un copolymère à 69 % en poids d'acétate de vinyle dont l'indice de fluidité à 170°C sous une charge de 10 kg s'élève à 1,9. Dans tous les exemples, le polyméthacrylate de méthyle utilisé présente un indice de fluidité de 35 mesuré à 210°C sous une charge de 10 kg.

La composition des adhésifs polymériques utilisés dans les exemples 1 à 22, en particulier leur teneur pondérale en acétate de vinyle [VAC] et leur viscosité dynamique à 100°C et 1 sec$^{-1}$ [ η ], ainsi que le produit [VAC] . [ η ] figurent au tableau II en annexe.

La viscosité dynamique des adhésifs polymériques est évaluée sur un rhéomètre qui permet de mesurer les propriétés mécaniques et dynamiques des polymères de l'état vitreux ou cristallin à l'état fondu. Les mesures s'effectuent sur des pastilles de 1 à 2 mm d'épaisseur et de 2,5 cm de diamètre prélevées dans des échantillons préparés à partir de solutions à 15-20 % en poids des adhésifs polymériques dans le tétrahydrofuranne.

Après évaporation du tétrahydrofuranne pendant 48 heures à température ambiante, le résidu polymérique est chauffé pendant 2 minutes à 100°C et ensuite pressé pendant 2 minutes à 100°C sous une pression de 80 bars. L'échantillon pressé est ensuite refroidi sous une pression de 80 bars jusqu'à la température ambiante, après quoi il est découpé en pastilles.

La mesure consiste à déterminer sous une fréquence ν de 0,16 cycle par seconde, c'est-à-dire pour un gradient de vitesse 1 sec$^{-1}$ et à une température de 100°C, les modules G' et G". La viscosité dynamique à 100°C et 1 sec$^{-1}$, se calcule ensuite par la formule suivante :

$$\eta = \frac{G'^2 + G''^2}{2 \pi \upsilon}$$

Avec une racle à fil de 200 µm, on enduit le film en polyfluorure de vinylidène d'une solution d'adhésif polymérique à 20 % en poids dans le tétrahydrofuranne, on sèche l'enduit dans un four conditionné à 80°C pendant 3 minutes. L'épaisseur de l'enduit sec s'élève à 30 µm. Le film préencollé en polyfluorure de vinylidène est pressé à chaud sur une couche en polychlorure de vinyle souple pendant 1,30 minute et sous une pression de 30 bars dans une presse LAFARGE maintenue à 140°C, puis le complexe est transféré dans une presse froide et y est maintenu à température ambiante pendant 8 minutes sous la même pression.

Dans le tableau II en annexe sont repris les résultats de l'évaluation de l'adhérence mesurée par le biais de la résistance au pelage des structures multicouches selon les exemples 1 à 22. La résistance au pelage est mesurée sur un dynamomètre FRANK type 650 suivant une méthode inspirée de la norme ASTM D 1876-72. Avant la mesure, les échantillons sont conditionnés dans une salle isotherme à 23°C pendant 24 heures (adhérence à 23°C), respectivement dans une étuve ventilée à 80°C pendant 20 minutes (adhérence à 80°C).

La comparaison des résultats des exemples selon l'invention avec ceux des exemples de comparaison montre la supériorité appréciable des adhésifs polymériques selon la présente invention, tout particulièrement sur le plan de l'adhérence à chaud, sur des adhésifs polymériques de même composition ou de composition similaire mais qui ne répondent pas à la revendication (produit [VAC . η]< 1,4 . 10$^3$ ). A comparer plus particulièrement les résultats des exemples 1 et 7 selon l'invention avec ceux de l'exemple 6, de comparaison et des exemples 2 à 4, selon l'invention, avec ceux de l'exemple 5, de comparaison.

Tableau I

| N° de l'exemple | Nature du polymère polaire | Epaisseur de la couche en polymère polaire |
|---|---|---|
| 11 | Polyuréthane élastomère thermoplastique | 600 µm |
| 12 | Polyuréthane élastomère thermoplastique | 600 µm |
| 13 | Polychlorure de vinyle rigide | 2 mm |
| 14 | Polychlorure de vinyle rigide | 2 mm |
| 15 | Polycarbonate aromatique dérivé de bisphénol A | 2 mm |
| 16 | Polycarbonate aromatique dérivé de bisphénol A | 2 mm |
| 17 | Polyméthacrylate de méthyle | 2 mm |
| 18 | Copolymère de chlorure de vinylidène et de chlorure de vinyle | 145 µm |
| 19 | Copolymère de chlorure de vinylidène et de chlorure de vinyle | 145 µm |
| 20 | Copolymère de chlorure de vinylidène et de chlorure de vinyle | 145 µm |
| 21 | Copolymère ABS | 2 mm |
| 22 | Copolymère ABS | 2 mm |

Tableau II

| N° de l'exemple | Composition de l'adhésif polymérique | | | | Adhérence, Newton/cm | |
|---|---|---|---|---|---|---|
| | Proportion pondérale PVAC/PMMA | [VAC], % en poids | η, kPa.s | [VAC].η | à 23°C | à 80°C |
| 1 | 100/0 | 82 | 24 | 1968 | 16,49 | 3,26 |
| 2 | 90/10 | 74 | 25 | 1850 | 18,72 | 2,66 |
| 3 | 75/25 | 61,5 | 29 | 1784 | 16,65 | 2,85 |
| 4 | 50/50 | 41 | 40 | 1640 | 11,96 | 2,28 |
| 5 | 25/75 | 21 | 65 | 1365 | 7,15 | 0,88 |
| 6 | 100/0 | 68 | 7,5 | 510 | 4,30 | 0,05 |
| 7 | 100/0 | 69 | 27 | 1900 | 13,72 | 4,05 |
| 8 | 90/10 | 62 | 29 | 1800 | 15,65 | 3,97 |
| 9 | 75/25 | 52 | 33 | 1730 | 14,93 | 3,70 |
| 10 | 50/50 | 34,5 | 43 | 1480 | 12,52 | 3,11 |
| 11 | 75/25 | 61,5 | 29 | 1784 | 17,20 | 4,00 |
| 12 | 90/10 | 61 | 9,5 | 580 | 4,40 | 0 |
| 13 | 75/25 | 61,5 | 29 | 1784 | 30 | 5,40 |
| 14 | 50/50 | 34 | 18 | 610 | 15 | 1,00 |
| 15 | 50/50 | 41,0 | 40 | 1640 | Rupture* | 8,00 |
| 16 | 90/10 | 61,0 | 9,5 | 580 | Rupture* | 1,30 |
| 17 | 90/10 | 74 | 25 | 1850 | Rupture* | 5,30 |
| 18 | 90/10 | 74 | 25 | 1850 | Rupture* | 4,00 |
| 19 | 50/50 | 41 | 40 | 1640 | Rupture* | 4,00 |
| 20 | 50/50 | 34 | 18 | 610 | Rupture* | 0,40 |
| 21 | 75/25 | 61,5 | 29 | 1784 | 16,53 | 15,07 |
| 22 | 25/75 | 21 | 65 | 1365 | 7,61 | 2,74 |

\* Rupture = adhérence supérieure à la résistance du film.

**Revendications**

1. Structures à couches polymériques multiples comprenant une couche en polymère du fluorure de vinylidène liée à une couche en polymère polaire à l'intervention d'un adhésif polymérique constitué d'un copolymère binaire d'acétate de vinyle et d'éthylène contenant de 60 à 90 % en poids d'acétate de vinyle et, caractérisées en ce que le produit de la teneur pondérale en acétate de vinyle de l'adhésif polymérique, exprimée en pourcent, par sa viscosité dynamique à 100°C et 1 sec $^{-1}$, exprimée en kPa.s, est supérieur à $1,4 . 10^3$.

2. Structures à couches polymériques multiples suivant la revendication 1, caractérisées en ce que le produit de la teneur pondérale en acétate de vinyle de l'adhésif polymérique, exprimée en pourcent, par sa viscosité dynamique à 100°C et 1 sec $^{-1}$, exprimée en kPa.s, est supérieur à $1,6 . 10^3$.

3. Structures à couches polymériques multiples suivant la revendication 1, caractérisées en ce que l'adhésif polymérique contient en outre du polyméthacrylate de méthyle en une quantité n'excédant pas 50 % en poids.

4. Structures à couches polymériques multiples suivant la revendication 3, caractérisées en ce que l'adhésif polymérique contient du polyméthacrylate de méthyle en une quantité n'excédant pas 25 % en poids.

**5.** Structures à couches polymériques multiples suivant l'une quelconque des revendications 1 à 4, caractérisées en ce que l'adhésif polymérique est constitué de 75 à 90 % en poids de copolymère binaire d'acétate de vinyle et d'éthylène et de 25 à 10 % en poids de polyméthacrylate de méthyle.

**6.** Structures à couches polymériques multiples suivant l'une quelconque des revendications 1 à 5, caractérisées en ce que le polymère polaire est choisi parmi le polychlorure de vinyle, les copolymères acrylonitrile-butadiène-styrène (ABS) et les polycarbonates aromatiques.

**7.** Structures à couches polymériques multiples suivant la revendication 6, caractérisées en ce que le polymère polaire est du polychlorure de vinyle souple dont la dureté Shore A ne dépasse pas 90.

**8.** Structures à couches polymériques multiples suivant l'une quelconque des revendications 1 à 7, caractérisées en ce qu'elles résultent d'un assemblage par thermocollage à l'intervention d'une solution du polymère adhésif.

**9.** Structures à couches polymériques multiples suivant l'une quelconque des revendications 1 à 7, caractérisées en ce qu'elles résultent d'un assemblage par thermolaminage, par coextrusion ou par coextrusion-doublage.

## Claims

**1.** Structures with multiple polymeric layers comprising a vinylidene fluoride polymer layer bonded to a polar polymer layer by the use of a polymeric adhesive consisting of a binary copolymer of vinyl acetate and ethylene containing from 60 to 90 % by weight of vinyl acetate, which are characterized in that the product of the weight content of vinyl acetate of the polymeric adhesive, expressed in per cent, and its dynamic viscosity at 100 °C and 1 s$^{-1}$, expressed in kPa s, is greater than 1.4 x 10$^3$.

**2.** Structures with multiple polymeric layers according to Claim 1, characterized in that the product of the weight content of vinyl acetate of the polymeric adhesive, expressed in per cent, and its dynamic viscosity at 100 °C and 1 s$^{-1}$, expressed in kPa s, is greater than 1.6 x 10$^3$.

**3.** Structures with multiple polymeric layers according to Claim 1, characterized in that the polymeric adhesive in addition contains polymethyl methacrylate in a quantity not exceeding 50 % by weight.

**4.** Structures with multiple polymeric layers according to Claim 3, characterized in that the polymeric adhesive contains polymethyl methacrylate in a quantity not exceeding 25 % by weight.

**5.** Structures with multiple polymeric layers according to any one of Claims 1 to 4, characterized in that the polymeric adhesive consists of 75 to 90 % by weight of binary copolymer of vinyl acetate and ethylene containing form 60 of 90 % by weight of vinyl acetate and of 25 to 10 % by weight of polymethyl methacrylate.

**6.** Structures with multiple polymeric layers according to any one of Claims 1 to 5, characterized in that the polar polymer is chosen from polyvinyl chloride, acrylonitrile/butadiene/styrene (ABS) copolymers and aromatic polycarbonates.

**7.** Structures with multiple polymeric layers according to Claim 6, characterized in that the polar polymer is flexible polyvinyl chloride whose Shore A hardness does not exceed 90.

**8.** Structures with multiple polymeric layers according to any one of Claims 1 to 7, characterized in that they result from an assembly by thermal bonding with the aid of a solution of the adhesive polymer.

**9.** Structures with multiple polymeric layers according to any one of Claims 1 to 7, characterized in that they result from an assembly by heat-lamination, by coextrusion or by coextrusion-doubling.

## Patentansprüche

**1.** Polymerschichtstoffe, die eine Polyvinylidenfluoridschicht umfassen, welche durch die Vermittlung eines Haftpolymers, das aus einem binären Copolymer aus Vinylacetat und Ethylen besteht, welches 60 bis 90 Gew.-% Vinylacetat enthält, mit einer Schicht aus einem polaren Polymer verbunden ist, dadurch gekennzeichnet, daß das Produkt des auf das Gewicht bezogenen Gehalts an Vinylacetat des Haftpolymers, ausgedrückt in Prozent, mal seiner dynamischen Viskosität bei 100 °C und 1 s$^{-1}$, ausgedrückt in kPa · s, größer als 1,4 · 10$^3$ ist.

2. Polymerschichtstoffe gemäß Anspruch 1, dadurch gekennzeichnet, daß das Produkt des auf das Gewicht bezogenen Gehalts an Vinylacetat des Haftpolymers, ausgedrückt in Prozent, mal seiner dynamischen Viskosität bei 100 °C und 1 s$^{-1}$, ausgedrückt in kPa • s, größer als 1,6 • 10$^3$ ist.

3. Polymerschichtstoffe gemäß Anspruch 1, dadurch gekennzeichnet, daß das Haftpolymer außerdem Polymethylmethacrylat in einer Menge enthält, die 50 Gew.-% nicht überschreitet.

4. Polymerschichtstoffe gemäß Anspruch 3, dadurch gekennzeichnet, daß das Haftpolymer Polymethylmethacrylat in einer Menge enthält, die 25 Gew.-% nicht überschreitet.

5. Polymerschichtstoffe gemäß einem der Ansprüche 1 bis 4, dadurch gekennzeichnet, daß das Haftpolymer aus 75 bis 90 Gew.-% binärem Copolymer aus Vinylacetat und Ethylen und aus 25 bis 10 Gew.-% Polymethylmethacrylat besteht.

6. Polymerschichtstoffe gemäß einem der Ansprüche 1 bis 5, dadurch gekennzeichnet, daß das polare Polymer unter Polyvinylchlorid, den Acrylnitril-Butadien-Styrol-Copolymeren (ABS) und den aromatischen Polycarbonaten ausgewählt ist.

7. Polymerschichtstoffe gemäß Anspruch 6, dadurch gekennzeichnet, daß das polare Polymer Weich-Polyvinylchlorid ist, dessen Shore-A-Härte 90 nicht übersteigt.

8. Polymerschichtstoffe gemäß einem der Ansprüche 1 bis 7, dadurch gekennzeichnet, daß sie aus einem Zusammenfügen mittels Thermokleben durch die Vermittlung einer Lösung des Haftpolymers hervorgehen.

9. Polymerschichtstoffe gemäß einem der Ansprüche 1 bis 7, dadurch gekennzeichnet, daß sie aus einem Zusammenfügen mittels Thermolaminieren, mittels Coextrusion oder mittels Coextrusionsbeschichten hervorgehen.